# EUROPÄISCHE PATENTSCHRIFT

(11) **EP 1 600 246 B1**
(45) Veröffentlichungstag und Bekanntmachung des Hinweises auf die Patenterteilung: **23.04.2008**
(21) Anmeldenummer: 05011212.7
(22) Anmeldetag: 24.05.2005
(51) Int. Cl.: B23K 26/32, B64D 11/06

(54) **Titan-Aluminium-Sitzschiene**
Titanium-Aluminium-Seatslide
Rail de siege de titan et d'aluminium

(30) Priorität: 28.05.2004 DE 102004026228; 03.08.2004 US 598272 P
(43) Veröffentlichungstag der Anmeldung: 30.11.2005
(73) Patentinhaber: Airbus Deutschland GmbH, 21129 Hamburg (DE)
(72) Erfinder: Kocik, Rainer, 28209 Bremen (DE); Schumacher, Jörg, Dr., 27308 Kirchlinteln (DE); Kaschel, Sebastian, 28199 Bremen (DE); Kreimeyer, Michael, 28816 Stuhr-Moordeich (DE); Vollertsen, Frank, Dr., 28357 Bremen (DE)
(74) Vertreter: Maiwald Patentanwalts GmbH

(56) Entgegenhaltungen:
- GB-A- 2 321 626
- SCHUBERT E ET AL: "LASER BEAM JOINING OF MATERIAL COMBINATIONS FOR AUTOMOTIVE APPLICATIONS" PROCEEDINGS OF THE SPIE, SPIE, BELLINGHAM, VA, US, Bd. 3097, 16. Juni 1997 (1997-06-16), Seiten 212-221, XP001069339 ISSN: 0277-786X
- PAVEL SKODA, JAN DUPAK, PETR MICHALICKA: "Creation of heterogeneous weld joints of titanium- and aluminium-based materials by electron beam welding" WELDING SCIENCE & TECHNOLOGY, INTERNATIONAL WELDING CONFERENCE, Nr. 30, 7. März 1996 (1996-03-07), Seiten 157-160, XP009052232 Slovakia ISBN: 80-7099-255-7
- KREIMEYER M ET AL: "Laser processing of aluminum-titanium-tailored blanks" OPTICS AND LASERS IN ENGINEERING, ELSEVIER, Bd. 43, Nr. 9, Februar 2005 (2005-02), Seiten 1021-1035, XP004928832 ISSN: 0143-8166
- KATAYAMA S: "LASER WELDING OF ALUMINIUM ALLOYS AND DISSIMILAR METALS" WELDING INTERNATIONAL, WELDING INSTITUTE, CAMBRIDGE, GB, Bd. 18, Nr. 8, 1. August 2004 (2004-08-01), Seiten 618-625, XP001200350 ISSN: 0950-7116

## Beschreibung

Die vorliegende Erfindung betrifft Bauteile für ein Flugzeuge und zwar Bauteile, in denen Titanbereiche und Aluminiumbereiche thermisch gefügt sind. Ferner betrifft die vorliegende Erfindung ein Verfahren zum Verbinden eines ersten Bereichs aus einem Titanwerkstoff und eines zweiten Bereichs aus einem ersten Aluminiumwerkstoff zur Bildung eines Bauteils für ein Flugzeug.

Im Folgenden wird das Feld der Erfindung werkstofftechnisch, verfahrenstechnisch und anwendungstechnisch beschrieben:

### Werkstofftechnisch:

Das thermische Fügen unterschiedlicher Werkstoffe wird seit 1935 z.B. in Holler, M.; Meier, H.: "Beitrag zu den Untersuchungen der Autogenverbindungen mit anderen Metallen"; Autogene Metallverarbeitung, 28, 1935, 12, Seite 177-187, publiziert. Solche in der Literatur genannten Fügetechniken weisen zumeist einen Doppelcharakter auf, das heißt: Für die niedrig schmelzenden Werkstoffe liegt ein Schweißprozess vor, da sie aufgeschmolzen werden. Die Fügetemperatur wird bei diesen Verfahren so eingestellt, dass für die bei höheren Temperaturen schmelzenden Fügepartner ein Lötprozess vorliegt. Für den Moment des Fügens sind unterschiedliche Temperaturleitfähigkeiten, Schmelzpunkte und Löslichkeiten der Werkstoffe von besonderer Bedeutung. Die stoffschlüssige Verbindung der Metalle erfolgt über prozessbedingte temperatur- und zeitbestimmte Diffusionsvorgänge. Dabei entstehen im Verbindungsbereich mehr oder weniger stark ausgeprägte intermetallische Phasensäume. Viele interessante Paarungen aus Legierungen weisen bezüglich Schmelzpunkt und Wärmeleitfähigkeit große Differenzen auf, die beim Fügen mit konventionellen Schweißverfahren wie WIG, MIG oder E-Hand zum Problem werden und zur Rissbildung führen können.

### Verfahrenstechnisch

Dupak et al., Applications of a New Electron Beam Welding Technology in Vacuum Equipment Design, 2000, Kovine, zlitine, tehnologije / letnik 29 / 1995 / St. 3-4 / strani 431-432, stellt ein Elektronenstrahlverfahren vor, mit dem Aluminium mit z.B. Kupfer, Nickel, Silber und Stahl gefügt werden können. Zuerst wird der Nahtbereich mit einem defokussierten Laserstrahl bis knapp unter die Schmelztemperatur des niedrig schmelzenden Werkstoffs erwärmt.

Anschließend wird mit einem fokussierten Laserstrahl der niedrig schmelzende Werkstoff aufgeschmolzen, so dass dieser den bei höheren Temperaturen schmelzenden Werkstoff benetzen kann. Das Verfahren beschränkt sich auf rotationssymmetrische Bauteile. Dupak will so Verbindungen herstellen, die mechanisch widerstandsfähig sind und sich für Anwendungen in der Vakuumtechnik eignen. Es sind zwei Elektronenstrahlfügeprozesse nacheinander erforderlich, um eine zuverlässige Verbindung zwischen den Werkstoffen zu gewährleisten. Der Zeit- und Kostenaufwand des Fügeprozesses ist groß.

N. N.: "Titan kann mit Aluminium verbunden werden. Nippon-Aluminium nimmt dünne Kupferlagen und ultraschallbehandeltes Lot". Blick durch die Wirtschaft - Beilage zur Frankfurter Allgemeinen Zeitung, Band 36 (1993), Heft 150, S. 8, beschreibt ein Lötverfahren, das eine Herstellung von Blechen und Formteilen aus Titan und Aluminium ermöglicht. Im Prozessablauf zur Erzeugung derartiger Verbindungen wird kupferplattiertes Titan eingesetzt. Als Lotwerkstoff wird ein Zink-Aluminium-Lot verwendet. Das Lot wird auf dem Titan appliziert und kurzzeitig einer Ultraschallbehandlung unterzogen. Anschließend wird das anzubindende Aluminiumteil oder Blech in engen Kontakt mit dem auf der Titanseite geschmolzenen Lot gebracht. Die Verbindung beider Metalle erfolgt anschließend durch eine erneute Ultraschallaufheizung.

Ein weiteres Verfahren wurde in Suoda "Creation of heterogenian weld joints of titanium and alumininum based materials by electron beam welding", Welding scince and technologie; Japan, Slovak; Welding Symposium, Tatranske Matliare, 1996, S. 157-161 offenbart. Im Rahmen dieser Publikation wird der Einsatz eines Elektronenstrahlschweißens beschrieben. Ziel der Arbeit von Suoda war es, durch den Einsatz des Elektronenstrahls einen Al-Ti-Mischkristall anstelle intermetallischer Phasen zu erzeugen. Dabei wird der Elektronenstrahl kurzzeitig ausschließlich auf die Grenzschicht des niedrigschmelzenden Aluminiums gerichtet, so dass sich das höher schmelzende Titan in dem Schmelzfilm auflöst. Die Versuche wurden unter Hochvakuum durchgeführt. Die Untersuchung der Schweißnähte zeigte allerdings, dass das angestrebte Ziel nicht erreicht werden konnte: An den Grenzflächen bildeten sich Risse und intermetallische Phasen.

Fuji, A.; Ameyama, K.; North, T.H.: "Influence of silicon in aluminium on the mechanical properties of titanium/aluminium friction joints." In: Journal of Materials Science, 1995, Band 30, Heft 20, Seite 5185-5191 und Fuji, A.; Kimura, M.; North, T. H.; Ameyama, K.; Aki, M.: "Mechanical properties of titanium-5083 aluminium alloy friction joints." In: Materials Science and Technology, 1997, Band 13, Heft 8, Seite 673-678, betreffen die Verbindung Ti-Al unter Berücksichtigung der Auswirkungen von Silizium für das Reibschweißen mit nachfolgender Wärmebehandlung. Die Duktilität der Verbindung leidet danach unter der Bildung von TiAl₃ im Phasenübergang. Mit Siliziumanteilen innerhalb der Aluminiumbasislegierung kann die Bildung von TiAl₃ vermindert werden. Es wird vermutet vermutet, dass Siliziumausscheidungen als Barriere für einen Diffusionsprozess wirken.

Ein weiteres Verfahren, wurde in N.N: Department of Materials and Metallurgical Engineering: "Stability of interfaces in explosively-welded aluminium-Titanium laminates", New Mexico Tech, Socorro, USA, Journal of Materials Science Letters 19, Seite 1533-1535] veröffentlicht. Hier wurde Aluminium und Titan durch Explosionsschweißen miteinander verbunden, um Applikationen für den Leichtbau zu entwickeln.

### Anwendungstechnisch

Die Fa. Boeing setzt stranggepresste Titansitzschienen in Bereichen ein, in denen bei Aluminiumsitzschienen vermehrt Korrosion festgestellt wurde. Solche Sitzschienen könnten ebenfalls strangpresstechnisch oder geschweißt hergestellt werden.

### Die oben beschriebenen Lösungen weisen folgende Nachteile auf:

### Verfahrenstechnisch

Enge Prozessgrenzen (z.B. Anwendungen nur: 1) im Dünnblechbereich; 2) auf lineare, ebene oder rotationssymmetrische Bauteile)
Hohe Verfahrens-/Fertigungskosten
Schlechte oder keine Möglichkeit für Reparaturschweißen

### Anwendungstechnisch

Sitzschienen aus Titan iösen einerseits das Korrosionsproblem an Aluminiumsitzschienen, welches hohe Instandhaltungskosten bei den Fluggesellschaften hervorruft. Andererseits hat dieser Lösungsansatz den Nachteil, dass die Anschaffungskosten und das Bauteilgewicht dieser Sitzschienen im Vergleich zu Aluminiumsitzschienen deutlich höher sind.

Schubert et. al.: "Laser beam joining of material combinations for automotive applications" proceedings ofthe SPIE, SPIE, Bellingham, Seiten 212-221, XP001069339, ISSN: 0277-786X betrifft ein Verfahren zum Verbinden von Materialien für Anwendungen in der Automobilindustrie. Zur Erwärmung wird ein Laserstrahl eingesetzt.

GB-A-2 321 626 betrifft eine Sitzschiene für einen Flugzeugpassiersitz.

Es ist eine Aufgabe der vorliegenden Erfindung, ein Titan-Aluminiumbauteil für ein Flugzeug anzugeben, das beispielsweise als Sitzschiene verwendet werden kann.

Gemäß dem Ausführungsbeispiel der vorliegenden Erfindung nach Anspruch 1 wird ein Bauteil für ein Flugzeug zur Verfügung gestellt, mit einem ersten Bereich aus einem Titanwerkstoff und einem zweiten Bereich aus einem Aluminiumwerkstoff. Der erste Bereich und der zweite Bereich sind stoffschlüssig miteinander verbunden, wodurch ein integrales Bauteil in Hybridbauweise zur Verfügung gestellt wird. Insbesondere wird die Korrosionsbeständigkeit des Titans mit dem leichten Gewicht und der Kostengünstigkeit des Aluminiums kombiniert.

Gemäß einem Ausführungsbeispiel der vorliegenden Erfindung nach Anspruch 1 sind der erste und zweite Bereich durch einen Wärmeleitungsschweißprozess im Aluminiumwerkstoff des zweiten Bereichs stoffschlüssig miteinander verbunden. In vorteilhafter Art und Weise wird hierbei Wärme auf den Aluminiumwerkstoff und den Titanwerkstoff aufgebracht.

Dies kann beispielsweise mittels eines defokussierten Laserstrahls oder Elektronenstrahls realisiert werden, der dann unmittelbaren Fügebereich und Bereiche des Aluminiums und des Titans beidseitig der Fügestelle bestrahlt. Die flächige Wärmeeinwirkung kann zum einen das Aufschmelzen des niedrig schmelzenden Aluminiums (bzw. eines Werkstoffreservoirs, welches beidseitig angeordnet sein kann) bewirken. Durch die eingebrachte Wärme wird die Oberfläche des Titans aktiviert, so dass der aufgeschmolzene Aluminiumwerkstoff das Titan benetzen kann. Die stoffschlüssige Verbindung zwischen den beiden Werkstoffen entsteht dann durch Diffusion.

Gemäß einem vorteilhaften Ausführungsbeispiel der vorliegenden Erfindung nach Anspruch 1 werden der erste und der zweite Bereich durch ein im Aluminiumwerkstoff des zweiten Bereichs ablaufenden Tiefschweißprozess in Kombination mit einem durch einen Wärmefluss hin zum Titanwerkstoff ausgelösten Diffusionsprozess stoffschlüssig verbunden. Die Wärmeeinbringung bewirkt das Aufschmelzen des niedrig schmelzenden Aluminiumwerkstoffs (oder des Werkstoffreservoirs). Durch Wärmeleitung wird die Oberfläche des Titans aktiviert, so dass der aufgeschmolzene Aluminiumwerkstoff das Titan benetzen kann. Die stoffschlüssige Verbindung zwischen den beiden Werkstoffen entsteht durch Diffusion. In vorteilhafter Art und Weise genügt es hierbei, einen Laserstrahl oder Elektronenstrahl eine Wärmezufuhr lediglich auf den Aluminiumwerkstoff aufzubringen. Also kann es hierbei genügen, einen Laserstrahl oder Elektronenstrahl auf das Aluminium zu fokussieren.

Gemäß dem vorteilhaften Ausführungsbeispiel der vorliegenden Erfindung, nach Anspruch 1 angegeben, ist das Bauteil eine Sitzschiene für einen Flugzeugpassagiersitz. Insbesondere ermöglicht dies vorteilhaft eine Kombination beispielsweise der Korrosionsfestigkeit von Titan mit den günstigen Kosten und dem geringen Gewicht des Aluminiums. So kann insbesondere in korrosionsgefährdeten Bereichen Titan auf einer Aluminiumtragestruktur aufgebracht werden. Diese Hybridbauweise ist insbesondere für den Flugzeugbau vorteilhaft, wo geringes Gewicht jedoch auch Korrosionsbeständigkeit wichtig sind. Bei der Sitzschiene für einen Flugzeugpassagiersitz kann das kostenintensive Titan auf die Sitzschienenkrone begrenzt werden und die Tragestruktur bzw. der Unterbau der Schiene mittels Aluminium ausgestaltet werden.

Im Folgenden werden mit Verweis auf die begleitenden Figuren bevorzugte Ausführungsbeispiele der vorliegenden Erfindung beschrieben.

Fig. 1 zeigt einen Querschnitt eines ersten Ausführungsbeispiels einer Sitzschiene für einen Passagiersitz eines Flugzeugs, die mit einem Verfahren gemäß der vorliegenden Erfindung hergestellt worden ist.

Fig. 2 zeigt einen Querschnitt eines zweiten Ausführungsbeispiels einer Sitzschiene gemäß der vorliegenden Erfindung, die mit einem weiteren Verfahren gemäß der vorliegenden Erfindung hergestellt worden ist.

Fig. 3 zeigt einen Querschnitt durch einen Bereich eines dritten Ausführungsbeispiels einer Sitzschiene gemäß der vorliegenden Erfindung, die mit einem weiteren Ausführungsbeispiel eines Verfahrens gemäß der vorliegenden Erfindung hergestellt worden ist.

Fig. 4 zeigt einen Querschnitt durch einen Bereich eines vierten Ausführungsbeispiels einer Sitzschiene gemäß der vorliegenden Erfindung, die mit einem weiteren Verfahren gemäß der vorliegenden Erfindung hergestellt worden ist.

Fig. 5 zeigt einen Querschnitt durch ein fünftes Ausführungsbeispiel einer Sitzschiene gemäß der vorliegenden Erfindung, die mit einem weiteren Verfahren gemäß der vorliegenden Erfindung hergestellt worden ist.

Fig. 6 zeigt eine mikroskopische Aufnahme einer lasergefügten Aluminium-Titan-T-Stoßverbindung, wie sie beispielsweise in Fig. 5 erhalten werden kann.

Fig. 7 zeigt eine mikroskopische Aufnahme einer lasergefügten Aluminium-Titan-I-Stoßverbindung, wie sie beispielsweise in dem Ausführungsbeispiel, das in Fig. 3 gezeigt ist, erhalten werden kann.

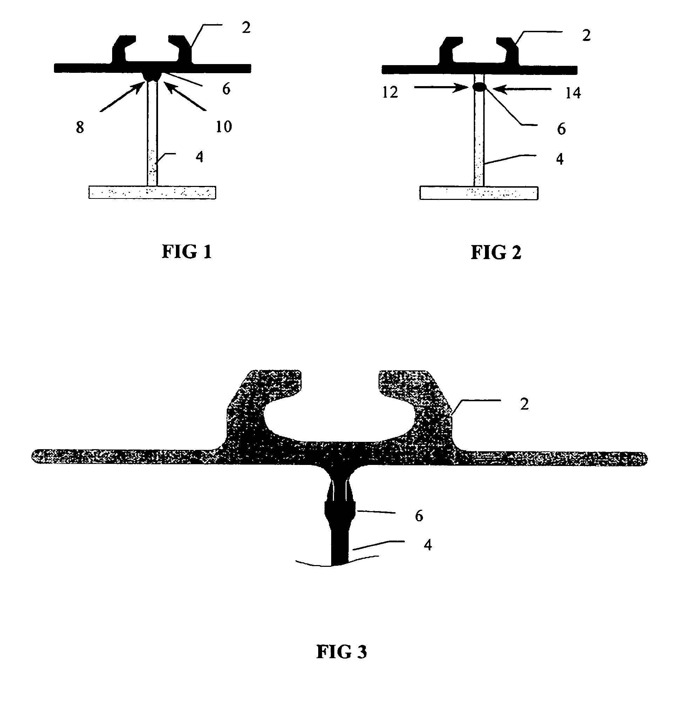

In der folgenden Beschreibung der Fig. 1 bis 7 werden für gleiche oder sich entsprechende Elemente die gleichen Bezugsziffern verwendet.

Fig. 1 zeigt ein erstes Ausführungsbeispiel einer Sitzschiene gemäß der vorliegenden Erfindung in Schnittansicht. Die Sitzschiene umfasst eine Sitzschienenkrone 2, die aus einem Titanwerkstoff ausgestaltet ist und eine Tragestruktur 4 aus einem Aluminiumwerkstoff. Solche Sitzschienen werden verwendet, um in einem Flugzeug Passagiersitze zu befestigen. Die Sitzschienenkrone 2 und die Tragestruktur 4 sind an einem Punkt oder Bereich 6 stoffschlüssig miteinander verbunden. Die in Fig. 1 dargestellte Verbindung stellt einen T-Stoß dar. Wie im Folgenden noch detaillierter beschrieben wird, wird die Verbindung zwischen der Sitzschienenkrone 2 und der Tragestruktur 4 durch Diffusion erzeugt. Zum thermischen Fügen der Sitzschienenkrone 2 und der Tragestruktur 4 wird Wärme, wie mittels den Pfeilen, die mit Bezugsziffern 8 und 10 bezeichnet sind, der Stelle 6 zugeführt.

Grundsätzlich ist es möglich, die Wärme derart zuzuführen, dass die Wärme der Sitzschienenkrone 2 sowie der Tragestruktur 4 zugeführt wird. Jedoch ist es auch möglich, wie im Folgenden noch detaillierter beschrieben wird, die Wärmezufuhr lediglich auf den Aluminiumwerkstoff der Tragestruktur 4 zu beschränken und der Sitzschienenkrone 2 keine direkte Wärme zuzuführen. Die Wärmeaufbringung auf die Sitzschienenkrone 2 und die Tragestruktur 4 bewirkt zum einen das Aufschmelzen des niedrig schmelzenden Aluminiumwerkstoffes oder eines Werkstoffes eines Werkstoffreservoirs, welches beidseitig oder einseitig angeordnet werden kann. Durch die eingebrachte Wärme wird die Oberfläche des Titans aktiviert, so dass der aufgeschmolzene Aluminiumwerkstoff das Titan benetzen kann. Die stoffschlüssige Verbindung zwischen den beiden Werkstoffen entsteht dann durch Diffusion. Zusätzlich kann ein Bereich um den Punkt 6 mit einem lokalen inerten Gasschutz aus Argon und/oder Helium angewendet werden. Dieser Gasschutz ist vorteilhaft, da Titan bei höheren Temperaturen eine hohe Affinität zu Atmosphärengasen aufweist, wodurch es zu unerwünschten Diffusions- und Bindungsvorgängen kommen könnte. Auch kann durch Anwendung eines solchen Gasschutzes eine Werkstoffversprödung des Titans vermieden werden. Zur Wärmeaufbringung kann beispielsweise ein BIAS-Laserbearbeitungskopf mit integrierter Glasschutzeinheit verwendet werden, wie beispielsweise in dem deutschen Gebrauchsmuster DE 2901 12 023.3 beschrieben.

Wie zuvor schon angedeutet, kann es auch ausreichend sein, lediglich einen Wärmeeintrag auf die Tragestruktur 4 auszuführen. Dadurch wird ein im Aluminium ablaufender Tiefschweißprozess in Kombination mit einem durch den Wärmefluss hin zum Titan ausgelösten Diffusionsprozess erzeugt, welcher die Sitzschienenkrone 2 mit der Tragestruktur 4 stoffschlüssig miteinander verbindet.

Wie in Fig. 1 dargestellt, wird hier die Tragestruktur 4 mittels eines T-Stoßes an der Sitzschienenkrone 2 angebracht. In anderen Worten wird ein Steg der Tragestruktur 4 an eine Fläche der Sitzschienenkrone 2 angebracht.

Fig. 2 zeigt eine schematisierte Schnittansicht eines zweiten Ausführungsbeispiels einer Sitzschiene gemäß der vorliegenden Erfindung.

Wie Fig. 2 zu entnehmen ist, ist hier die Tragestruktur 4 mittels eines I-Stoßes an der Sitzschienenkrone 2 angebracht. Hierfür weist die Sitzschienenkrone 2 einen Steg auf, der auf Stoß mit einem Steg der Tragestruktur 4 erfindungsgemäß verschweißt wird. Wie in Fig. 2 dargestellt, kann beispielsweise im rechten Winkel auf die zwei Schweißstellen Wärmeenergie aufgebracht werden. Dies ist in Fig. 2 mit den Pfeilen 12 und 14 dargestellt. Es kann jedoch ausreichend sein, lediglich von einer Seite Wärmeenergie aufzubringen. Wie zuvor schon angedeutet, kann die Wärmeenergie beispielsweise mittels eines Elektronenstrahls oder eines Laserstrahls aufgebracht werden. Wie später mit Verweis auf die Fig. 3 bis 5 weiter beschrieben wird, kann der Laser- oder Elektronenstrahl fokussiert oder auch defokussiert sein.

Wie den Fig. 1 und 2 zu entnehmen ist, kann ein Winkel, der, wie beispielsweise ein Laser- oder Elektronenstrahl, fokussiert oder defokussiert auf die Verbindungsstelle gerichtet ist, eingestellt sein, d. h. beispielsweise rechtwinklig bezüglich des Steges der Tragestruktur 4 sein oder auch in einem gewissen Winkel zu der Fläche der Sitzschienenkrone 2 (Fig. 1).

Fig. 3 zeigt eine Detailschnittansicht einer Sitzschiene gemäß einem weiteren vorteilhaften Ausführungsbeispiel der vorliegenden Erfindung. Wie Fig. 3 zu entnehmen ist, ist die Sitzschienenkrone 2 und die Tragestruktur 4 mittels einer 1-Stoßverbindung zusammengefügt. Hierzu weist die Sitzschienenkrone 2 einen Steg 18 auf. Die Tragestruktur 4 weist eine lokale Aufdickung 20 auf, in die eine Nut 24 eingearbeitet ist, deren Ausmaß dem Ausmaß des Stegs 18 entspricht. Der Steg 18 ist in die Nut 24 eingefügt. Die Aufdickung 20 dient als Werkstoffreservoir für den Fügevorgang.

Gemäß der vorliegenden Erfindung wird von beiden Seiten Wärme auf Bereiche beidseitig der Fügestelle appliziert. Hierfür kann beispielsweise, wie mittels der Bezugsziffern 12 und 14 dargestellt, ein defokussierter Laserstrahl derart auf die Fügestelle gerichtet werden, dass Bereiche des Titanwerkstoffs der Sitzschienenkrone 2 und des Aluminiumwerkstoffs der Tragestruktur 4 erwärmt werden. Die Titan- und Aluminiumwerkstoffe werden dann durch den im Aluminium ablaufenden Wärmeleitungsschweißprozess stoffschlüssig miteinander verbunden. Die flächige Wärmeeinbringung bewirkt zum einen das Aufschmelzen des niedrig schmelzenden Aluminiums der Tragestruktur bzw. des Werkstoffreservoirs, das durch die Aufdickung 20 gebildet wird. Durch die eingebrachte Wärme wird die Oberfläche des Titans aktiviert, so dass der aufgeschmolzene Aluminiumwerkstoff das Titan benetzen kann. Die stoffschlüssige Verbindung zwischen den beiden Werkstoffen entsteht dann durch Diffusion. Durch diesen Fügevorgang wird Aluminiumwerkstoff in Bereichen um die Fügestelle auf dem Titanwerkstoff der Sitzschienenkrone 2 abgelagert, wie mit der Bezugsziffer 22 in Fig. 3 bezeichnet.

Die Nut 24 ermöglicht vorteilhaft die einfache Aufnahme des Titanbauteils und gewährt in vorteilhafter Art und Weise eine gute Positionierbarkeit der beiden Fügepartner.

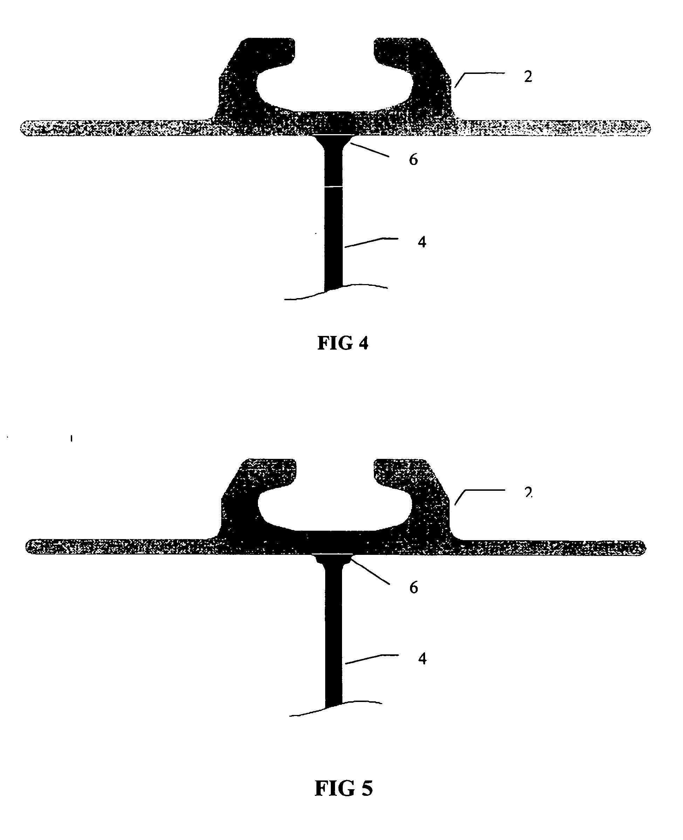

Fig. 4 zeigt eine weitere Schnittansicht eines weiteren Ausführungsbeispiels einer Sitzschiene gemäß der vorliegenden Erfindung. In dem Ausführungsbeispiel von Fig. 4 wird ein Zusatzwerkstoff 32 verwendet. Der in Fig. 4 verwendete Zusatzwerkstoff 32 kann bandförmig ausgestaltet sein. Wie in Fig. 1 dargestellt, kann solch eine T-förmige Fügung der Titansitzschienenkrone 2 mit der Tragestruktur 4 auch ohne Verwendung des Zusatzwerkstoffs 32 ausgeführt werden.

Wie Fig. 4 zu entnehmen ist, werden beidseitig von der Tragestruktur 4 fokussierte Laserstrahlen oder Elektronenstrahlen 40 und 42 auf die Fügestelle gerichtet. Die Laser- oder Elektronenstrahlen 40 und 42 weisen beispielsweise einen Winkel α zur unteren Fläche der Sitzschienenkrone 2 auf.

Die Laser- oder Elektronenstrahlen, die mit dem Einstrahlwinkel α fokussiert in das Aluminiumblech der Tragestruktur 4 eingebracht werden, bewirken das Aufschmelzen des niedrig schmelzenden Aluminiumwerkstoffs und/oder des Zusatzwerkstoffs 32. In diesem Fall kann es ausreichend sein, die direkte Wärmeeinbringung mittels des Laserstrahls auf die Tragestruktur, d.h. auf das Aluminium zu beschränken. Es ist dann kein direkter Wärmeeintrag durch Laser oder Elektronenstrahl auf das Titan nötig. Durch Wärmeleitung von dem Aluminium auf das Titan wird die Oberfläche des Titans der Sitzschienenkrone 2 aktiviert, so dass der aufgeschmolzene Aluminiumwerkstoff das Titan benetzen kann. Die stoffschlüssige Verbindung zwischen den beiden Werkstoffen entsteht dann durch Diffusion. Die Verwendung des Zusatzwerkstoffs 32 ermöglicht vorteilhaft, dass hauptsächlich Material des Zusaizwerkstoffs zur Fügung verwendet wird und wenig Material der Tragestruktur für die Fügeverbindung verwendet wird.

Fig. 5 zeigt ein weiteres Ausführungsbeispiel einer Sitzschiene gemäß der vorliegenden Erfindung in Schnittansicht. Wie in Fig. 4 sind in Fig. 5 die Sitzschienenkrone 2 und die Tragestruktur 4 in T-Stoßkonfiguration miteinander verbunden. Im Gegensatz zu dem Ausführungsbeispiel von Fig. 4 ist in Fig. 5 ein drahtförmiger Zusatzwerkstoff 34 und 36 vorgesehen. Die Laser- oder Elektronenstrahlen 44 und 46 sind auf die Tragestrukturseite der Fügestelle 6 gerichtet, so dass das Aluminium der Tragestruktur und/oder der drahtförmigen Zusatzwerkstoffe 34 und 36 erwärmt wird. Dadurch kommt es zur gewünschten Materialablagerung an der Fügestelle.

In vorteilhafter Art und Weise ermöglicht die vorliegende Erfindung eine deutliche Verringerung eines Zerspanvolumens im Titanbereich der Sitzschiene. Ein Aluminiumstangenpress- oder Schweißprofil, das verwendet werden kann, muss aufgrund der einfachen Geometrie nicht oder nur im Bereich der Nut spanend bearbeitet werden. Aufgrund des reduzierten Arbeitsaufwandes sowie aufgrund des verminderten Bedarfs an teuerem Titanwerkstoff ergibt sich ein Kostenvorteil und eine einfachere Verarbeitung. Überdies kann durch gezielte Anwendung oder auch durch Verzicht von Zusatzwerkstoffen eine Materialabtragung oder -auftragung an der Fügestelle gezielt gesteuert werden. Gerade für den Flugzeugbau ermöglicht die vorliegende Erfindung eine Gewichtsersparnis gegenüber vollständigen Titankonstruktionen.

Als Titanlegierung kann beispielsweise Ti6Al4V verwendet werden. Als Aluminiumlegierungen können beispielsweise AW-6013 T4 und AW-7349/-7055 T76511 oder AW-6016 T4 verwendet werden.

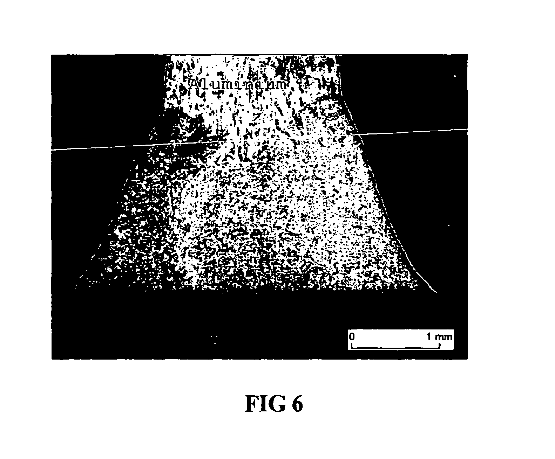

Fig. 6 zeigt eine mikroskopische Schnittansicht einer lasergefügten Aluminium-Titan-T-Stoßverbindung mit drahtförmigem Zusatzwerkstoff, wie sie beispielsweise schematisiert in Fig. 5 dargestellt ist.

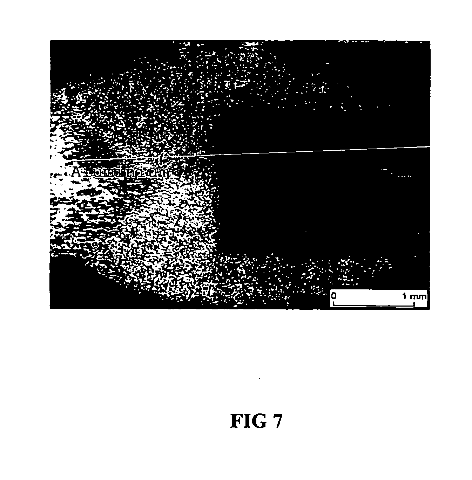

Fig. 7 zeigt eine mikroskopische Ansicht einer lasergefügten Aluminium-Titan-I-Stoßverbindung, wie sie schematisiert beispielsweise in Fig. 3 dargestellt ist.

Den Figs. 6 und 7 ist zu entnehmen, dass die Werkstoffe an der Fügelinie gut verbunden sind. Die Fügestelle oder Schweißstelle ist symmetrisch ausgebildet. Die Verbindung ist in vorteilhafter Art und weise sehr homogen. Vorteilhaft ist das Titan nicht aufgeschmolzen.

Die vorliegende Erfindung lässt sich vorteilhaft im Flugzeugbau anwenden, wo die Kombination aus korrosionsbeständigen Bauelementen mit geringem Gewicht erforderlich ist.

Ergänzend ist darauf hinzuweisen, dass "umfassend" keine anderen Elemente oder Schritte ausschließt und "eine" oder "ein" keine Vielzahl ausschließt. Bezugszeichen in den Ansprüchen sind nicht als Einschränkungen anzusehen.

## Patentansprüche

1. Bauteil, umfassend:
einen ersten Bereich (2) aus einem Titanwerkstoff;
einen zweiten Bereich (4) aus einem Aluminiumwerkstoff;
wobei der erste und der zweite Bereich durch einen im Aluminiumwerkstoff des zweiten Bereichs ablaufenden Tiefschweißprozess oder Wärmeleitungsschweißprozess in Kombination mit einem durch einen Wärmefluss vom Aluminiumwerkstoff hin zum Titanwerkstoff ausgelösten Diffusionsprozess stoffschlüssig miteinander verbunden sind, und
wobei das Bauteil eine Sitzschiene für einen Flugzeugpassagiersitz ist.

2. Bauteil nach Anspruch 1,
wobei der erste und der zweite Bereich (2, 4) durch einen Wärmeleitungsschweißprozess im Aluminiumwerkstoff des zweiten Bereichs stoffschlüssig verbunden sind.

3. Bauteil nach einem der Ansprüche 1 bis 2,
wobei der erste Bereich (2) einen Steg (18) aufweist;
wobei der zweite Bereich (4) eine Aufdickung (10) mit einer Nut (24) zur Aufnahme des Stegs (18) aufweist.

4. Verfahren zum Verbinden eines ersten Bereichs aus einem Titanwerkstoff und eines zweiten Bereichs aus einem ersten Aluminiumwerkstoff zur Bildung eines Bauteils,
wobei das Bauteil eine Sitzschiene für einen Flugzeugpassagiersitz ist, und wobei das Verfahren folgende Schritte umfasst:
Anordnen des ersten und des zweiten Bereichs derart, dass eine erste Region des ersten Bereichs und eine zweite Region des zweiten Bereichs, die miteinander zu verbinden sind, aneinander angrenzend angeordnet sind;
Aufschmelzen eines zweiten Aluminiumwerkstoffs bei der ersten Region mittels Wärmezufuhr;
Aktivieren einer Oberfläche in der ersten Region des ersten Bereichs mittels Wärmezufuhr;
wobei die Wärmezufuhr derart ist, dass der aufgeschmolzene zweite Aluminiumwerkstoff den aktivierten Titanwerkstoff benetzt und eine stoffschlüssige Verbindung zwischen dem ersten Bereich und dem Zweiten Bereich durch einen Diffusionsprozess gebildet wird, der durch einen Wärmefluss vom Aluminiumwerkstoff hin zum Titanwerkstoff ausgelöst wird.

5. Verfahren nach Anspruch 4,
wobei der zweite Aluminiumwerkstoff der erste Aluminiumwerkstoff des zweiten Bereichs ist.

6. Verfahren nach Anspruch 4 oder 5,
wobei die Wärmezufuhr auf die erste Region des ersten Bereichs und die zweite Region des zweiten Bereichs ausgeführt wird.

7. Verfahren nach einem der Ansprüche 4 bis 6,
wobei die Wärmezufuhr auf die zweite Region des zweiten Bereichs ausgeführt wird.

8. Verfahren nach einem der Ansprüche 4 bis 7, ferner umfassend die Schritte:
Zuführen der Wärme mittels eines defokussierten Laserstrahls oder Elektronenstrahls; und
Zuführen eines Schutzgases.

9. Verfahren nach einem der Ansprüche 4 bis 8. ferner umfassen die Schritte:
Vorsehen eines Stegs in der ersten Region des ersten Bereichs;
Vorsehen einer Nut in der zweiten Region des zweiten Bereichs;
Einstecken des Stegs in die Nut;
wobei in dem zweiten Bereich eine Aufdickung mit dem zweiten Aluminiumwerkstoff vorgesehen ist;
wobei die Aufdickung als Materialreservoir zur Verbindung des ersten und zweiten Bereichs vorgesehen ist.

## Claims

1. Component comprising:
a first area (2) made of a titanium material;
a second area (4) made of an aluminium material;
wherein the first and the second areas are integrally bonded to each other by a deep-welding process in the aluminium material of the second area or heat conduction welding process in combination with a diffusion process initiated by a heat flux from the aluminium material toward the titanium material, and
wherein the component is a seat slide for a aircraft passenger seat.

2. Component according to claim 1,
wherein the first and the second areas (2, 4) are integrally bonded by a heat conduction welding process in the aluminium material of the second area.

3. Component according to either claim 1 or claim 2,
wherein the first area (2) comprises a web (18);
wherein the second area (4) comprises a thickened area (10) with a groove (24) for accommodating the web (18)

4. Method for bonding a first area made of a titanium material and a second area made of a first aluminium material to form a component, wherein the component is a seat slide for an aircraft passenger seat and wherein the method comprises the following steps:
arrangement of the first and of the second areas in such a way that a first region of the first area and a second region of the second area, which are to be bonded to each other, are arranged adjacent to each other;
melting a second aluminium material near the first region by supplying heat;
activation of a surface in the first region of the first area by supplying heat;
wherein the heat supply is such that the molten second aluminium material wets the activated titanium material and an integral bond is established between the first area and the second area by means of a diffusion process which is initiated by a heat flux from the aluminium material toward the titanium material.

5. Method according to claim 4,
wherein the second aluminium material is the first aluminium material of the second area.

6. Method according to claim 4 or 5,
wherein the heat is supplied to the first region of the first area and the second region of the second area.

7. Method according to any one of claims 4 to 6, wherein the heat is supplied to the second region of the second area.

8. Method according to any one of claims 4 to 7 further comprising the steps:
supplying the heat by means of a defocused laser beam or electron beam; and
supplying a inert gas.

9. Method according to any one of claims 4 to 8 further comprising the steps:
provision of a web in the first region of the first area;
provision of a groove in the second region of the second area;
insertion of the web in the groove;
wherein in the second area, a thickened area is provided with the second aluminium material;
wherein the thickened area is provided as a material reservoir for the bonding of the first and second areas.

## Revendications

1. Composant comprenant :
une première zone (2) en un titane ;
une deuxième zone (4) en un aluminium ;
dans lequel la première et la deuxième zones sont reliées l'une à l'autre par combinaison de matériaux, par l'intermédiaire d'un procédé de soudage profond ou d'un procédé de soudage par thermoconduction se déroulant dans l'aluminium de la deuxième zone en association avec un processus de diffusion déclenché par un transfert de chaleur de l'aluminium vers le titane, et
dans lequel le composant est un rail de siège pour un siège pour passager d'avion.

2. Composant selon la revendication 1,
dans lequel la première et la deuxième zones (2, 4) sont reliées par combinaison de matériaux, par un procédé de soudage par thermoconduction dans l'aluminium.

3. Composant selon l'une des revendications 1 à 2,
dans lequel la première zone (2) comporte un montant (18) ;
dans lequel la deuxième zone (4) comporte une surépaisseur (10) présentant une rainure (24) pour recevoir le montant (18).

4. Procédé destiné à relier une première zone en un titane et une deuxième zone en un premier aluminium pour former un composant, le composant étant un rail de siège pour un siège pour passager d'avion, et le procédé comprenant les étapes qui consistent à :
agencer la première et la deuxième zones, de façon à ce qu'une première région de la première zone et une deuxième région de la deuxième zone qu'il s'agit de relier l'une à l'autre soient disposées de manière adjacente l'une à l'autre ;
apporter par fusion un deuxième aluminium dans la première région au moyen d'un apport de chaleur ;
activer une surface dans la première région de la première zone au moyen d'un apport de chaleur ;
l'apport de chaleur étant tel que le deuxième aluminium apporté par fusion mouille le titane activé et qu'une liaison par combinaison de matériaux est formée entre la première zone et la deuxième zone par un processus de diffusion, qui est déclenché par un transfert thermique de l'aluminium vers le titane.

5. Procédé selon la revendication 4,
dans lequel le deuxième aluminium est le premier aluminium de la deuxième zone.

6. Procédé selon la revendication 4 ou 5,
dans lequel l'apport de chaleur est effectué à la première région de la première zone et la deuxième région de la deuxième zone.

7. Procédé selon l'une des revendications 4 à 6,
dans lequel l'apport de chaleur est effectué à la deuxième région de la deuxième zone.

8. Procédé selon l'une des revendications 4 à 7, comprenant par ailleurs les étapes qui consistent à :
apporter de la chaleur au moyen d'un rayon laser ou rayon électronique défocalisés et
apporter un gaz de protection.

9. Procédé selon l'une des revendications 4 à 8, comprenant par ailleurs les étapes qui consistent à :
prévoir un montant dans la première région de la première zone ;
prévoir une rainure dans la deuxième région de la deuxième zone ;
insérer le montant dans la rainure ;
dans lequel une surépaisseur du deuxième aluminium est prévue dans la deuxième zone ;
dans lequel la surépaisseur est prévue comme réservoir de matériau pour relier la première et la deuxième zones.
